# EUROPÄISCHE PATENTSCHRIFT

(11) **EP 0 343 448 B1**
(45) Veröffentlichungstag und Bekanntmachung des Hinweises auf die Patenterteilung: **20.10.1993**
(21) Anmeldenummer: 89108555.7
(22) Anmeldetag: 12.05.1989
(51) Int. Cl.: G01N 1/00, G01N 21/73

(54) **Vorrichtung zur Zufuhr von Flüssigkeit zu einem Zerstäuber bei einem Spektrometer**
Apparatus for feeding liquid to an atomizer for a spectrometer
Appareil pour amener un liquide vers un atomiseur dans un spectromètre

(30) Priorität: 27.05.1988 DE 3818058
(43) Veröffentlichungstag der Anmeldung: 29.11.1989
(73) Patentinhaber: BODENSEEWERK PERKIN-ELMER GMBH, D-88662 Überlingen (DE)
(72) Erfinder: Huber, Bernhard, D-7770 Überlingen (DE)
(74) Vertreter: Grünecker, Kinkeldey, Stockmair & Schwanhäusser Anwaltssozietät

(56) Entgegenhaltungen:
- EP-A- 0 095 291
- DE-A- 1 577 648
- US-A- 4 272 483
- US-A- 4 486 097

## Beschreibung

### Technisches Gebiet

Die Erfindung betrifft eine Vorrichtung zur Zufuhr von Flüssigkeit zu einer mit einem Zerstäuber arbeitenden Atomisierungsvorrichtung bei einem Spektrometer, wobei der Zerstäuber eine mit einer Druckluftzuleitung verbundene Düse enthält, in die eine Kapillare einmündet, über die der Zerstäuber Flüssigkeit ansaugen kann.

Zur Bestimmung der Konzentration von bestimmten Elementen in einer Probenflüssigkeit durch spektroskopische Methoden wird die Probenflüssigkeit mittels eines Zerstäubers in eine Atomisierungsvorrichtung zerstäubt. Diese Atomisierungsvorrichtung kann eine Flamme sein. In dieser Flamme liegen die Bestandteile der Probe in atomarer Form vor. Ein Meßlichtbündel durchsetzt die Flamme. Dieses Meßlichtbündel wird von Spektrallinien gebildet, die den Resonanzlinien eines gesuchten Elements entsprechen und wird dementsprechend spezifisch von den Atomen dieses Elements geschwächt. Die Abschwächung des Meßlichtbündels liefert daher ein Maß für die Konzentration des gesuchten Elements in der Probenflüssigkeit. Das bezeichnet man als mit einer Flamme arbeitende Atomabsorptions-Spektroskopie oder Flammen-AAS. Die Atomisierungsvorrichtung kann jedoch auch ein "Plasmabrenner" sein, in welchem durch induktive Erregung ein Plasma eines Edelgases erzeugt wird und die Probenflüssigkeit von einem Zerstäuber in dieses Plasma eingesprüht wird. In diesem auf hoher Temperatur befindlichen Plasma werden die Atome der Probenflüssigkeit zur Emission von Licht angeregt. Die Emissionslinien sind dabei charakteristisch für das jeweilige Element, während die Intensität der Linien ein Maß für die Konzentration des betreffenden Elements in der Probenflüssigkeit darstellt.

Für diese und andere mit Zerstäuber arbeitenden Atomisierungsvorrichtungen bei Spektrometern ist die Erfindung anwendbar.

### Zugrundeliegender Stand der Technik

Durch die US-A-4 486 097 ist eine spektroskopische Analysenvorrichtung bekannt, bei welcher eine Probenflüssigkeit, alternativ eine inerte Trägerflüssigkeit, und ein Reagenz durch eine Schlauchpumpe in einen gemeinsamen Mischkanal gefördert werden. Die Schlauchpumpe wird von einem Schrittmotor angetrieben. Der Schrittmotor wird von einem Mikroprozessor gesteuert. Die gemischten Flüssigkeiten fließen in eine Meßküvette eines Spektralphotometers.

Die EP-A2-0 236 928 zeigt die Zufuhr einer Probenflüssigkeit und eines Reagenz mittels einer Schlauchpumpe zu einem Analysengerät. Das Analysengerät kann ein Photometer sein, in dessen Meßküvette das Gemisch von Probenflüssigkeit und Reagenz geleitet wird und das auf eine Trübung oder Verfärbung der Probenflüssigkeit anspricht, die durch eine Reaktion der Probenflüssigkeit mit dem Reagenz hervorgerufen wird. Die EP-A2-0 236 928 zeigt Anordnungen, mittels welcher durch die gleiche Schlauchpumpe oder durch eine gesonderte, von einem Schrittmotor variabel angetriebene Schlauchpumpe eine Verdünnung der Probenflüssigkeit bewirkt werden kann, um die Konzentration der Probenflüssigkeit in einem günstigen Bereich zu halten.

Die EP-A2-0 095 291 zeigt eine Vorrichtung zum Mischen einer Probenflüssigkeit und eines Verdünnungsmittels (Diluent) mittels zweier Schlauchpumpen, welche in je eine Schlauchleitung fördern. Die Schlauchleitungen laufen zusammen und münden in eine gemeinsame Leitung, die zu einem Analysengerät geführt sind. Das Mischungsverhältnis kann geändert werden.

Die US-A-4 315 754 zeigt ein Analysengerät, bei welchem eine Trägerflüssigkeit und ein Reagenz durch Schlauchpumpen in eine Trägerleitung bzw. eine Reagenzleitung gepumpt werden. Die Träger- und Reagenzleitungen vereinigen sich zu einer Mischleitung, die zu einem Durchflußdetektor führt. In der Trägerleitung sitzt ein Umschaltventil. Durch dieses Umschaltventil ist eine Schleife, in welche Probenflüssigkeit einleitbar ist, wahlweise in die Trägerleitung einschaltbar.

Bei diesen bekannten Anordnungen werden die gemischten Flüssigkeiten in eine Küvette o.dgl. eingeleitet und als Flüssigkeiten in der Küvette photometriert.

Bei der Flammen - AAS wird eine Probenflüssigkeit von einem Zerstäuber in eine Flamme eingesprüht und in der Flamme atomisiert. Die Elemente der Probenflüssigkeit bilden dann in der Flamme einen Atomdampf. Ein Meßlichtbündel wird durch die Flamme mit diesem Atomdampf geleitet. Das Meßlichtbündel wird von einer linienemittierenden Lichtquelle ausgesandt und enthält nur Licht mit Resonanzlinien eines gesuchten Elements, dessen Konzentration bestimmt werden soll. Die Absorption, die dieses Meßlichtbündel in der Flamme erfährt, ist ein Maß für die Konzentration des gesuchten Elements in der Probenflüssigkeit.

In dem Zerstäuber wird von einem Druckgas durch Düsenwirkung ein Unterdruck erzeugt. In das Gebiet dieses Unterdrucks wird über eine Kapillare Probenflüssigkeit aus einem Probengefäß angesaugt. Durch die Unterschiede in den Strömungsgeschwindigkeiten des austretenden Druckgases und der angesaugten Probenflüssigkeit wird die Probenflüssigkeit in feine Tröpfchen zerrissen. Es entsteht ein Probennebel in einer Mischkammer, der von einem in die Mischkammer eingeleiteten Brenngasstrom in die Flamme mitgerissen wird (DE-B-22 04 938, US-A-3 525 476, DE-A1-35 31 276, DE-A1-30 26 155). Solche Zerstäuber haben eine begrenzte Förderkapazität. Sie können pro Zeiteinheit nur eine bestimmte Menge an Flüssigkeit ansaugen und zerstäuben.

Es sind weiterhin Plasmabrenner bekannt, in welchem durch Hochfrequenz ein Edelgasplasma erzeugt wird, das sehr hohe Temperaturen hat. In dieses Plasma wird die Probenflüssigkeit eingebracht. Die Probenflüssigkeit wird dabei atomisiert. Die Probenatome werden in dem Plasma zur Emission von Licht angeregt. Das Emissionsspektrum kann beobachtet und quantitativ ausgewertet werden (Welz "Atomabsorptions - Spektrometrie" 3. Aufl. (1983) Verlag Chemie, 271). Dieses Meßverfahren gestattet, anders als die Atomabsorptions - Spektroskopie, die gleichzeitige Messung verschiedener Elemente.

Es ist bekannt, die Probenflüssigkeit in den Plasmabrenner als Aerosol einzuleiten (Welz a.a.O). Es ist auch bekannt, dieses Aerosol mittels eines Zerstäubers zu erzeugen (Doherty und Hieftje in "Applied Spectroscopy" Bd. 38 (1984), 405-412).

Es ist weiterhin versucht worden, die Probenflüssigkeit mittels einer Schlauchpumpe zu dem Zerstäuber zu leiten. Das macht es aber erforderlich, die Fördermenge der Schlauchpumpe an die begrenzte Fördermenge des Zerstäubers anzupassen. Sonst entsteht ein Stau. Außerdem ergeben sich Probleme beim Probenwechsel. Es dauert lange, bis die in dem Schlauch enthaltenen Probenreste über den Zerstäuber mit seiner geringen Förderkapazität angesaugt und zerstäubt sind und der Schlauch gespült ist.

### Offenbarung der Erfindung

Der Erfindung liegt die Aufgabe zugrunde, eine Vorrichtung zur Zufuhr von Flüssigkeit zu einem pneumatischen Zerstäuber bei einem Spektrometer so auszubilden, daß eine Schlauchpumpe ohne das Problem der Anpassung der Fördermengen und ohne Stau vor dem Zerstäuber verwendet werden kann und daß bei einem Probenwechsel der Schlauch schnell gespült werden kann.

Erfindungsgemäß wird diese Aufgabe dadurch gelöst, daß die Vorrichtung aus folgenden Teilen besteht:
- einer Schlauchpumpe mit Zufuhrleitung zum Fördern der Flüssigkeit zur Kapillare
- ein auf Flüssigkeitsdruck ansprechendes Ventil, das im Bereich der Verbindung zwischen der Zufuhrleitung und der Kapillare angeordnet ist und das eine Verbindung von der Zufuhrleitung zu einem Auslaß herstellen kann, um Flüssigkeit, die vom Zerstäuber aufgrund seiner Förderkapazität nicht aufgenommen werden kann, in den Auslaß abzuleiten.

Bei einer solchen Anordnung kann die Fördermenge der Schlauchpumpe beliebig groß gewählt werden. Der Zerstäuber saugt stets eine seiner Förderkapazität entsprechende Menge an Flüssigkeit an und zerstäubt diese. Die überschüssige Flüssigkeit fließt über das Ventil ab. Das macht es möglich, nach einem Probenwechsel einen starken Strom von Spülflüssigkeit oder Probenflüssigkeit der nächsten Probe zu erzeugen, durch welchen der Schlauch bis hin zu dem Ventil schnell gespült wird. Über den Zerstäuber braucht nur der kleine Raum zwischen Ventil und Zerstäuberkapillare gespült zu werden. Damit wird die Kombination einer Schlauchpumpe mit einer mit Zerstäuber arbeitenden Atomisierungsvorrichtung praktisch anwendbar. Dies gibt wieder die Möglichkeit, die verschiedenen mit Schlauchpumpen arbeitenden Verfahren, wie sie oben teilweise als Stand der Technik geschildert sind, in Verbindung mit einer solchen Atomisierungsvorrichtung zu verwenden.

Vorteilhaft ist es, wenn die Geschwindigkeit der Schlauchpumpe von einem auf das Öffnen des Ventils ansprechenden Fühler steuerbar ist. Dadurch wird einer Vergeudung von Flüssigkeit, insbesondere Probenflüssigkeit, entgegengewirkt. Die Schlauchpumpe fördert nur soviel Flüssigkeit, daß das Ventil gerade öffnet. Der größte Teil dieser Flüssigkeit wird dann von dem Zerstäuber angesaugt, und nur ein kleiner Teil fließt über das Ventil ab.

Eine weitere Ausgestaltung der Erfindung besteht darin, daß wahlweise eine erste oder eine zweite Schlauchpumpe mit dem Zerstäuber verbindbar ist und die Geschwindigkeit der jeweils auf den Zerstäuber geschalteten Schlauchpumpe von dem auf das Öffnen des Ventils ansprechenden Fühler steuerbar ist. Das gestattet die abwechselnde Messung mit Probenflüssigkeit und Standard (Nullösung).

Eine andere Möglichkeit besteht darin, daß eine erste und eine zweite Schlauchpumpe parallel mit dem Zerstäuber verbunden sind und die Geschwindigkeiten der ersten und der zweiten Schlauchpumpen von dem auf das Öffnen des Ventils ansprechenden Fühler so steuerbar sind, daß die Summe der Fördermengen der beiden Schlauchpumpen auf einem geringfügig über der Förderkapazität des Zerstäubers liegenden Wert gehalten wird. Eine solche Anordnung ermöglicht beispielsweise das Herstellen verschiedener Verdünnungen.

Weiterhin kann, wie oben schon erwähnt, zum Spülen bei einem Probenwechsel die Fördermenge der Schlauchpumpe oder Schlauchpumpen auf einen die Förderkapazität des Zerstäubers wesentlich überschreitenden Wert vergrößerbar sein.

Ausgestaltungen der Erfindung sind Gegenstand der Unteransprüche.

Einige Ausführungs- und Anwendungsbeispiele der Erfindung sind nachstehend unter Bezugnahme auf die zugehörigen Zeichnungen näher erläutert.

### Kurze Beschreibung der Zeichnungen

- Fig.1: zeigt schematisch eine Zerstäuberdüse mit einer Vorrichtung zur Zufuhr einer Flüssigkeit, z.B. von Probenflüssigkeit zu dieser Zerstäuberdüse.
- Fig 2: zeigt schematisch die Füllung einer in einen Trägerflüssigkeitsstrom einschaltbaren Schleife mit einer Probenflüssigkeit zur Zufuhr zu einem Zerstäuber eines Brenners ("Flow Injection").
- Fig.3: zeigt die Anordnung von Fig.2 nach Einschalten in der Schleife in den Trägerflüssigkeitsstrom.
- Fig.4: zeigt eine Anordnung zur automatischen Verdünnung einer Probenflüssigkeit, die dem Zerstäuber eines Brenners bei einem Atomabsorptions - Spektrometer zugeführt wird, wobei die Vedünnung so erfolgt, daß sich ein optimales Signal ergibt.
- Fig.5: zeigt eine Anordnung, bei welcher einem Zerstäuber eines Brenners bei einem Atomabsorptions - Spektrometer wahlweise eine Probenflüssigkeit oder ein Standard, etwa eine Nullösung zugeführt werden kann, in dem Zustand, in welchem Probenflüssigkeit zugeführt wird.
- Fig.6: zeigt die Anordnung von Fig.5, wenn dem Zerstäuber Standard zugeführt wird.

### Bevorzugte Ausführungen der Erfindung

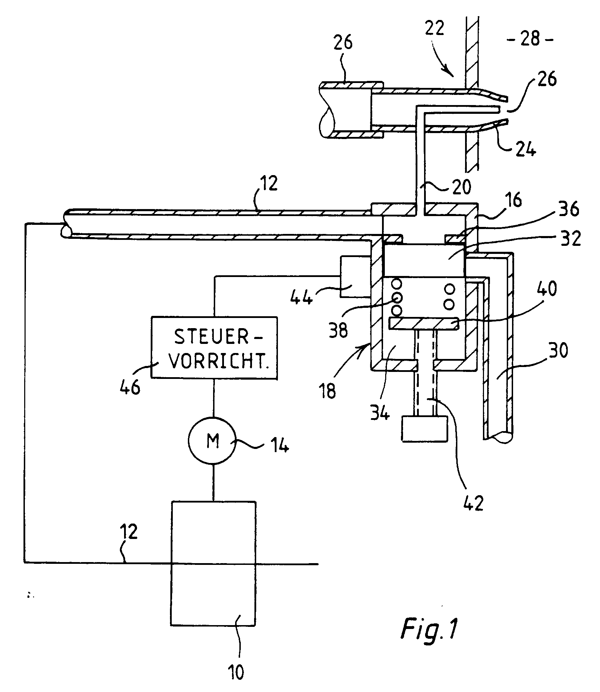

In Fig.1 ist mit 10 eine Schlauchpumpe bezeichnet. Die Schlauchpumpe 10 fördert eine Flüssigkeit, beispielsweise eine Probenflüssigkeit, in eine Schlauchleitung 12. Die Schlauchpumpe 10 wird von einem Schrittmotor 14 angetrieben. Die Schlauchleitung 12 führt zu einem Ventilgehäuse 16 eines Ventils 18. Von dem Ventilgehäuse 16 geht eine Kapillare 20 ab, die zu einem Zerstäuber 22 geführt ist. Der Zerstäuber 22 enthält eine Düse 24, die mit einer Druckluftzuleitung 26 verbunden ist. Über die Düse tritt die Druckluft unter Entspannung mit hoher Geschwindigkeit aus. Dadurch entsteht ein Unterdruck. Im Bereich 26 dieses Unterdrucks mündet die Kapillare 20. Der Unterdruck saugt dadurch Flüssigkeit aus der Schlauchleitung 12 und dem Ventilgehäuse 16 an. Durch den Unterschied der Geschwindigkeiten der Flüssigkeit und der Druckluft wird die Flüssigkeit zu feinen Tröpfchen zerrissen und bildet mit der Druckluft ein Aerosol. Dieses Aerosol wird in eine Mischkammer 28 eines Brenners geleitet. In der Mischkammer wird das Aerosol in bekannter Weise mit einem Brenngas gemischt und von diesem zu dem Brennerkopf mitgenommen. Das ist bekannte Technik und daher hier nicht im einzelnen dargestellt.

Das Ventil 18 spricht auf den Druck der Flüssigkeit in der Schlauchleitung 12 und dem Ventilgehäuse 16 an und beherrscht einen Auslaß 30, über den überschüssige Flüssigkeit in ein (nicht dargestelltes) Abfallgefäß abfließen kann. Zu diesem Zweck enthält das Ventil 18 einen Kolben 32. Dieser Kolben 32 gleitet in dem einen Zylinder 34 bildenden Ventilgehäuse 16. Von dem Zylinder 34 geht der Auslaß 30 seitlich ab. Der Hub des Kolbens 32 zu der Schlauchleitung 12 und der Kapillare 20 hin ist durch einen Anschlagring 36 begrenzt. Der Kolben 32 steht unter dem Einfluß einer vorgespannten Schraubenfeder 38. Die Schraubenfeder 38 stützt sich an einem Federwiderlager 40 ab. Das Federwiderlager 40 ist mittels einer Schraube 42 verstellbar. Dadurch kann die Vorspannung der Schraubenfeder 38 eingestellt werden und damit der Druck derFlüssigkeit, bei welchem das Ventil 18 öffnet. Wenn der Kolben 32 an dem Anschlagring 36 anliegt, ist der Auslaß 30 durch den Kolben 32 abgedeckt, das Ventil 18 also geschlossen.

Der Hub des Kolbens 32 wird durch einen Fühler 44 abgreifbar, der somit auf das Öffnen des Ventils 18 anspricht. Der Fühler 44 steuert über eine Steuervorrichtung 46 den Schrittmotor 14. Die Geschwindigkeit des Schrittmotors 14 wird von der Steuervorrichtung 46 so gesteuert, daß das Ventil 18 gerade etwas geöffnet ist.

Die Wirkungsweise der beschriebenen Anordnung ist wie folgt:
Der Zerstäuber 22 nimmt pro Zeiteinheit eine bestimmte maximale Flüssigkeitsmenge auf, auch wenn der Druck in der Schlauchleitung 12 ansteigt. Die Fördermenge der Schlauchpumpe 10 müßte an diese Förderkapazität des Zerstäubers 22 angepaßt werden, um einen Stau zu vermeiden. Aus diesem Grunde ist das Ventil 18 vorgesehen. Dieses Ventil 18 öffnet und leitet die vom Zerstäuber 22 nicht aufgenommene Flüssigkeit auf den Auslaß 30. Um dabei den Verbrauch an Flüssigkeit zu begrenzen, ist die Schlauchpumpe 10 von dem Fühler 44 über die Steuervorrichtung 46 gesteuert. Wenn das Ventil 18 zu weit öffnet, wird die Geschwindigkeit der Schlauchpumpe 10 reduziert. Auf diese Weise wird sichergestellt, daß der größte Teil der geförderten Flüssigkeit von dem Zerstäuber 22 aufgenommen wird und nur eine kleine Strömung über den Auslaß abfließt und verloren geht.

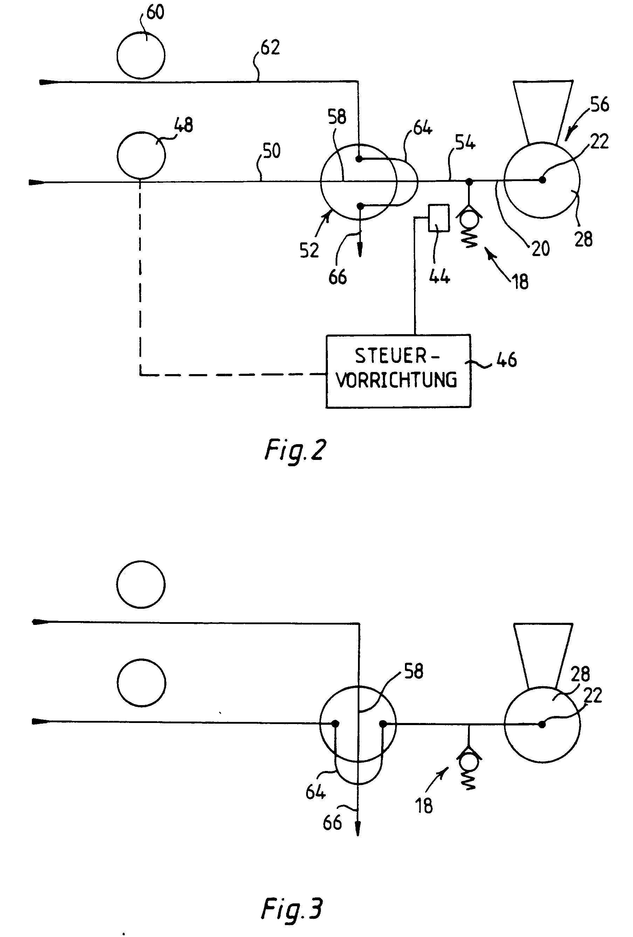

Fig.2 und 3 zeigt die Anwendung des beschriebenen Ventils 18 auf eine Probenaufgabe durch "Flow Injection". Dabei wird ein Strom von Trägerflüssigkeit durch eine Schlauchpumpe 48 auf eine Schlauchleitung 50 geleitet. Die Schlauchleitung 50 ist über ein Umschaltventil 52 mit einer Leitung 54 verbunden, die mit einem Zerstäuber 22 eines Brenners 56 verbunden ist. Dicht vor der zu dem Zerstäuber 22 führenden Kapillare ist das Ventil 18 angeordnet. Die Leitung 54 entspricht etwa der Leitung 12 von Fig.1, und die Ausbildung des Ventils 18 und des Zerstäubers 22 ist die gleiche, wie sie dort dargestellt ist. Das Umschaltventil 52 hat einen Durchgang 58, über welchen in der Stellung von Fig.2 die Verbindung zwischen der Schlauchleitung 50 und der Leitung 54 hergestellt wird.

Eine weitere Schlauchpumpe 60 fördert eine Probenflüssigkeit in eine Schlauchleitung 62. Die Schlauchleitung 62 ist über das Umschaltventil 52 und eine Meßschleife 64 mit einem Abfallauslaß 66 verbunden.

In der Stellung von Fig.2 erhält der Zerstäuber reine Trägerflüssigkeit, während von der Schlauchpumpe 60 die Meßschleife 64 mit Probenflüssigkeit gefüllt wird. Nach Umschalten des Umschaltventils in die Stellung von Fig.3 ist die Meßschleife 64 in den Strom von Trägerflüssigkeit eingeschaltet. Die Schlauchleitung 62, welche die Probenflüssigkeit enthält, ist über den Durchgang 58 mit dem Abfallauslaß 66 verbunden. Es wird dann die in der Meßschleife 64 enthaltene Probenflüssigkeit von dem Strom der Trägerflüssigkeit in den Zerstäuber 22 transportiert.

Das Signal des Fühlers 44 ist auf die Steuervorrichtung 46 geschaltet. Die Steuervorrichtung 46 steuert in Abhängigkeit von dem Signal des Fühlers 44 die Geschwindigkeit der Schlauchpumpe 60, die Flüssigkeit (Trägerflüssigkeit oder Probenflüssigkeit) zu dem Zerstäuber 22 fördert.

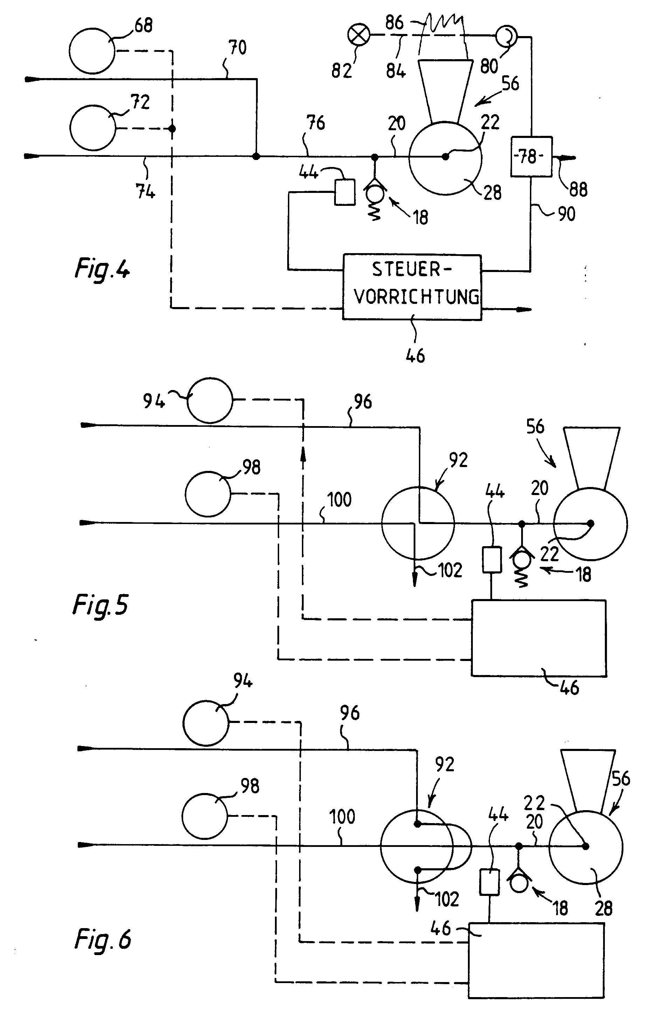

Bei der Anordnung nach Fig.4 fördert eine Schlauchpumpe 68 eine Probenflüssigkeit in eine als Schlauchleitung ausgebildete Probenleitung 70. Eine Schlauchpumpe 72 fördert eine Verdünnungsflüssigkeit in eine als Schlauchleitung ausgebildete Verdünnungsleitung 74. Die Probenleitung 70 und die Verdünnungsleitung 74 vereinigen sich zu einer Mischleitung 76, die zu dem Ventil 18 und über die Kapillare 20 zu dem Zerstäuber 22 eines Brenners 56 führt. Die Anordnung ist wieder die gleiche wie in Fig.1 dargestellt ist. Die Mischleitung 76 entspricht der Schlauchleitung 12 von Fig.1. Die Geschwindigkeiten der Schlauchpumpen 68 und 72 sind von der Steuervorrichtung 46 gesteuert. Die Steuervorrichtung 46 erhält wieder ein Signal von dem Fühler 44. Die Steuervorrichtung 46 erhält aber auch ein Signal von einer Signalauswerterschaltung 78, die von dem Signal eines Photodetektors 80 beaufschlagt ist. Eine linienemittierende Lichtquelle 82 sendet ein Meßlichtbündel 84 durch eine auf dem Brenner 56 brennende Flamme 86. Dieses Meßlichtbündel 84 fällt auf den Photodetektor 80. Das Meßlichtbündel 84 wird geschwächt nach Maßgabe der Konzentration eines gesuchten Elements in der Probenflüssigkeit. Dementsprechend hängt auch das Signal des Photodetektors von dieser Konzentration ab. Aus diesem Signal liefert die Signalauswerterschaltung 78 einen Meßwert für die Konzentration des gesuchten Elements in der Probenflüssigkeit. Dieser Meßwert wird an einem Ausgang 88 ausgegeben. Das ist das bekannte Prinzip der Atomabsorptions - Spektroskopie und daher hier nicht im einzelnen beschrieben.

Für die Messung der Atomabsorption ist jeweils ein bestimmter Konzentrationsbereich optimal. Ist die Konzentration des gesuchten Elements in der dem Zerstäuber zugeführten Flüssigkeit zu gering, weil etwa die Probenflüssigkeit zu stark mit Verdünnungsflüssigkeit verdünnt ist, dann wird die Empfindlichkeit zu gering: Es sind zu jedem Zeitpunkt zu wenige Atome des gesuchten Elements in der Flamme, und die geringe Absorption des Meßlichtbündels durch diese Atome geht in Untergrundabsorption und Rauschen unter. Ist die Konzentration des gesuchten Elements in dieser dem Zerstäuber zugeführten Flüssigkeit zu hoch, dann erfolgt eine praktisch vollständige Absorption des Meßlichtbündels, so daß auch keine genaue Konzentrationsmessung vorgenommen werden kann. Wenn praktisch alles Licht des Meßlichtbündels absorbiert wird, dann würde auch eine Verdopplung der Konzentration des gesuchten Elements keine wesentliche Änderung des Signals am Photodetektor 80 bringen. Zwischen diesen Extremfällen liegt ein Optimum der Konzentration, bei welchem die Konzentration mit hoher Genauigkeit gemessen werden kann. Durch Wahl der Geschwindigkeiten und damit Förderleistungen der beiden Schlauchpumpen 68 und 72 kann die Verdünnung der Probenflüssigkeit mit Verdünnungsflüssigkeit in definierter Weise variiert werden, und zwar so, daß sich eine optimale Empfindlichkeit ergibt. Zu diesem Zweck wird durch die Steuervorrichtung 46 das Verhältnis der Förderleistungen der beiden Schlauchpumpen 68 und 72 in Abhängigkeit von einem Ausgangssignal an einem Ausgang 90 der Signalverarbeitungsschaltung 78 so gesteuert, daß das Meßlichtbündel 84 in der Flamme 86 eine optimale mittlere Absorption erfährt. Ist die Absorption zu stark, wird die Geschwindigkeit der Schlauchpumpe 72 erhöht und die Geschwindigkeit der Schlauchpumpe 68 verringert. Ist die Absorption zu schwach, wird umgekehrt die Geschwindigkeit der Schlauchpumpe 68 erhöht und die Geschwindigkeit der Schlauchpumpe 72 vermindert.

Die Steuervorrichtung 46 steuert die Geschwindigkeiten der beiden Schlauchpumpen aber auch in Abhängigkeit von dem Signal des Fühlers 44 am Ventil 18. Die Geschwindigkeiten werden so gewählt, daß die Summe der Fördermengen der beiden Schlauchpumpen 68 und 72 geringfügig größer ist als die Förderkapazität des Zerstäubers.

Fig.5 und 6 zeigen eine Anordnung, bei welcher über ein Umschaltventil 92 wahlweise Probenflüssigkeit von einer Schlauchpumpe 94 über eine Leitung 96 oder ein Standard, beispielsweise eine Nullösung, durch eine Schlauchpumpe 98 über eine Leitung 100 auf den Zerstäuber 22 geleitet werden kann. In Fig.5 ist eine Stellung dargestellt, in welcher die Leitung 96 über das Umschaltventil 92 mit dem Zerstäuber 22 und dem Ventil 18 verbunden ist. Die Leitung 100 ist über das Umschaltventil 92 mit einem Abfallauslaß 102 verbunden. In Fig.6 ist die Leitung 100 über das Umschaltventil 92 mit dem Zerstäuber 22 und dem Ventil 18 verbunden. Die Leitung 96 ist mit dem Abfallauslaß 102 verbunden. Es kann so die Atomabsorption abwechselnd mit Probenflüssigkeit oder mit dem Standard gemessen werden.

Durch die Steuervorrichtung 46 wird jeweils diejenige Schlauchpumpe 94 oder 98 so geregelt, daß die Fördermenge geringfügig größer als die Förderkapazität des Zerstäubers ist, die über das Umschaltventil 92 mit dem Zerstäuber verbunden ist. Das ist in Fig .5 die Schlauchpumpe 94 und in Fig.6 die Schlauchpumpe 98, wie durch Pfeile an den gestrichelten Verbindungen angedeutet ist.

ZU Spülzwecken können die Schlauchpumpen bei allen Beispielen auf eine wesentlich erhöhte Fördermenge umgeschaltet werden, wobei Spülflüssigkeit oder Probenflüssigkeit der nächsten Probe angesaugt wird. Die erhöhte Fördermenge fließt dann über das Ventil 18 zum Auslaß 30 ab. Dadurch werden die Leitungen gespült unabhängig von der Förderkapazität des Zerstäubers 22. Der Zerstäuber 22 braucht nur die zum Spülen der Kapillare 20 erforderliche Flüssigkeitsmenge zu fördern. Es ist daher ein schneller Probenwechsel möglich.

## Patentansprüche

1. Vorrichtung zur Zufuhr von Flüssigkeit zu einer mit einem Zerstäuber arbeitenden Atomisierungsvorrichtung bei einem Spektrometer, wobei der Zerstäuber (22) eine mit einer Druckluftzuleitung (26) verbundene Düse (24) enthält, in die eine Kapillare (20) einmündet, über die der Zerstäuber (22) Flüssigkeit ansaugen kann,
dadurch gekennzeichnet, daß die Vorrichtung aus folgenden Teilen besteht:
- einer Schlauchpumpe (10) mit Zufuhrleitung (12) zum Fördern der Flüssigkeit zur Kapillare (20)
- ein auf Flüssigkeitsdruck ansprechendes Ventil (18), das im Bereich der Verbindung zwischen der Zufuhrleitung (12) und der Kapillare (20) angeordnet ist und das eine Verbindung von der Zufuhrleitung (12) zu einem Auslaß (30) herstellen kann, um Flüssigkeit, die vom Zerstäuber aufgrund seiner Förderkapazität nicht aufgenommen werden kann, in den Auslaß (30) abzuleiten.

2. Vorrichtung nach Anspruch 1, **dadurch gekennzeichnet, daß** die Geschwindigkeit der Schlauchpumpe (10) von einem auf das Öffnen des Ventils (18) ansprechenden Fühler (44) steuerbar ist.

3. Vorrichtung nach Anspruch 2, **dadurch gekennzeichnet, daß**
(a) wahlweise eine erste oder eine Zweite Schlauchpumpe (94 bzw. 98) mit dem Zerstäuber (22) verbindbar ist und
(b) die Geschwindigkeit der jeweils auf den Zerstäuber (22) geschalteten Schlauchpumpe (94 oder 98) von dem auf das Öffnen des Ventiils (18) ansprechenden Fühler (44) steuerbar ist.

4. Vorrichtung nach Anspruch 2, **dadurch gekennzeichnet,** **daß**
(a) eine erste und eine zweite Schlauchpumpe (68,72) parallel mit dem Zerstäuber (22) verbunden sind und
(b) die Geschwindigkeiten der ersten und der zweiten Schlauchpumpen (68 bzw. 72) von dem auf das Öffnen des Ventils (18) ansprechenden Fühler (44) so steuerbar sind, daß die Summe der Fördermengen der beiden Schlauchpumpen (68,72) auf einem geringfügig über der Förderkapazität des Zerstäubers (22) liegenden Wert gehalten wird.

5. Vorrichtung nach einem der Ansprüche 1 bis 4, **dadurch gekennzeichnet, daß** zum Spülen bei einem Probenwechsel die Fördermenge der Schlauchpumpe (10) oder Schlauchpumpen auf einen die Förderkapazität des Zerstäubers (22) wesentlich überschreitenden Wert vergrößerbar ist.

6. Vorrichtung nach Anspruch 1 oder 2, **dadurch gekennzeichnet, daß**
(a) die Schlauchpumpe (48) eine Trägerlösung zu dem Zerstäuber (22) fördert,
(b) eine zweite Schlauchpumpe (60) vorgesehen ist, durch welche eine Probenflüssigkeit in eine zu einem Abfallauslaß (66) geführte Probenleitung (62) förderbar ist,
(c) eine Meßschleife (64) und
(d) ein Umschaltventil (52) vorgesehen ist, über welches die Meßschleife (64) wahlweise in die Trägerleitung (50) oder in die Probenleitung (62) einschaltbar und ein Durchgang (58) für die jeweils andere Leitung herstellbar ist.

7. Vorrichtung nach Anspruch 1 oder 2, **dadurch gekennzeichnet, daß** eine erste Schlauchpumpe (68) Probenflüssigkeit in eine Probenleitung (70) und eine zweite Schlauchpumpe (72) eine Verdünnungsflüssigkeit in eine Verdünnungsleitung (74) fördert, die im Abstand von dem Ventil (18) und dem Zerstäuber (22) in eine gemeinsame Mischleitung (76) münden.

8. Vorrichtung nach Anspruch 7, **dadurch gekennzeichnet, daß** die Geschwindigkeit der Schlauchpumpen (68,72) veränderbar ist.

9. Vorrichtung nach Anspruch 1 oder 2, dadurch gekennzeichnet, daß
(a) eine erste Schlauchpumpe (94) Probenflüssigkeit in eine Probenleitung (96) fördert,
(b) eine zweite Schlauchpumpe (98) eine Standardflüssigkeit in eine Standardleitung (100) fördert und
(c) ein Umschaltventil (92) vorgesehen ist, durch welches wahlweise die Probenleitung (96) oder die Standardleitung (100) mit dem Zerstäuber (22) und die jeweils andere Leitung mit einem Abfallauslaß (102) verbindbar ist.

## Claims

1. Device for supplying liquid to an atomisation device operating with a nebuliser in a spectrometer, wherein the nebuliser (22) contains a nozzle (24) which is connected to a pressurised air supply conduit (26) and into which a capillary (20) opens, through which capillary the nebuliser (22) is capable of aspirating liquid,
characterised in that the device consists of the following members:
- a peristaltic pump (10) including a supply conduit (12) for feeding the liquid to the capillary (20)
- a liquid pressure responsive valve (17) which is disposed in the region of the connection between the supply conduit (12) and the capillary (20) and which is capable of establishing communication between the supply conduit (12) and an outlet (30) in order to discharge liquid which can not be taken up by the nebuliser due to its feed capacity, to the outlet (30).

2. Device according to claim 1, characterised in that the rate of the peristaltic pump (10) is controllable by means of a sensor (44) in response to the opening of the valve (18).

3. Device according to claim 2, characterised in that
(a) a first or a second peristaltic pump (94 and 98, respectively) are selectively connectable to the nebuliser (22) and
(b) the rate of the peristaltic pump (94 or 98, respectively) selectively connected to the nebuliser (22) is controllable by means of the sensor (44) in response to the opening of the valve (18).

4. Device according to claim 2, characterised in that
(a) a first and a second peristaltic pump (68 and 72, respectively) are connected in parallel to the nebuliser (22) and
(b) the rates of the first and the second peristaltic pumps (68 and 72, respectively) are controllable by means of the sensor (44) in response to the opening of the valve (18) in a manner such that the sum of the feed quantities of the two peristaltic pumps (68, 72) is maintained at a value slightly above the feed capacity of the nebuliser (22).

5. Device according to any one of claims 1 to 4, characterised in that the feed quantity of the peristaltic pump (10) or the peristaltic pumps is increasable to a value substantially exceeding the feed capacity of the nebuliser (22) for rinsing during a sample change.

6. Device according to claim 1 or 2, characterised in that
(a) the peristaltic pump (48) feeds a carrier solution to the nebuliser (22),
(b) a second peristaltic pump (60) is provided for feeding a sample liquid into a sample conduit (62) lead to a waste outlet (66),
(c) a measuring loop (64) and
(d) a change-over valve (52) is provided by means of which the measuring loop (64) is selectively connectable into the carrier conduit (50) or into the sample conduit (62) and a passage (58) for the respectively other conduit can be established.

7. Device according to claim 1 or 2, characterised in that a first peristaltic pump (68) feeds sample liquid into a sample conduit (70) and a second peristaltic pump (72) feeds a diluent liquid into a dilution conduit (74), which open at a spacing from the valve (18) and the nebuliser (22) into a common mixing conduit (76).

8. Device according to claim 7, characterised in that the rate of the peristaltic pumps (68, 72) is variable.

9. Device according to claim 1 or 2, characterised in that
(a) a first peristaltic pump (94) feeds sample liquid into a sample conduit (96),
(b) a second peristaltic pump (98) feeds a standard liquid into a standard conduit (100) and
(c) a change-over valve (92) is provided by means of which the sample conduit (96) or the standard conduit (100) is selectively connectable to the nebuliser (22) and the respective other conduit to a waste outlet (102).

## Revendications

1. Dispositif destiné à l'alimentation de liquide à un dispositif d'atomisation opérant avec un nébulisateur dans un spectromètre, dans lequel le nébulisateur (22) comprend une tuyère (24) reliée à une conduite d'alimentation d'air comprimée (26), tuyère dans laquelle débouche un tube capillaire (20) par lequel le nébulisateur (22) peut aspirer du liquide,
caractérisé par le fait que le dispositif est constitué des éléments suivants:
- une pompe tubulaire (10) munie d'une conduite d'alimentation (12) afin de transporter le liquide vers le tube capillaire (20)
- une soupape (18) répondant à la pression de liquide et disposée dans le domaine de la connexion entre la conduite d'alimentation (12) et le tube capillaire (20) et qui peut établir une connexion de la conduite d'alimentation (12) à la sortie (30) afin de conduire le liquide non pris par par le nébulisateur à cause de sa capacité de transport, dans la sortie (30).

2. Dispositif selon la revendication 1, **caractérisé par le fait que** la vitesse de la pompe tubulaire (10) est susceptible d'être commandée par un détecteur (44) répondant à l'ouverture de la soupape (18).

3. Dispositif selon la revendication 2, **caractérisé par le fait que**
(a) une première ou une seconde pompe tubulaire (94 ou 98) est susceptible d'être reliée à choix, au nébulisateur (22), et
(b) la vitesse de la pompe tubulaire (94 ou 98) respectivement appliquée au nébulisateur (22) peut être commandée par le détecteur (44) répondant à l'ouverture de la soupape (18).

4. Dispositif selon la revendication 2, **caractérisé par le fait que**
(a) une première et une seconde pompe tubulaire (68,72) sont reliées parallèlement au nébulisateur (22), et
(b) les vitesses de la première et de la seconde pompe tubulaire (68 et 72) peuvent être commandées par le détecteur (44) répondant à l'ouverture de la soupape (18) de sorte que la somme de la quantité de transport des deux pompes tubulaires (68,72) est tenue à une valeur faiblement supérieure à la capacité de transport du nébulisateur (22).

5. Dispositif selon l'une des revendications 1 à 4, **caractérisé par le fait qu'**aux fins de rincage lors de l'échange d'échantillon, la quantité de transport de la pompe tubulaire (10) ou des pompes tubulaires peut être augmentée à une valeur dépassant largement la capacité de transport du nébulisateur (22).

6. Dispositif selon la revendication 1 ou 2, **caractérisé par le fait que**
(a) la pompe tubulaire (48) transporte une solution porteuse au nébulisateur (22),
(b) on a prévu une seconde pompe tubulaire (60) par laquelle un liquide d'échantillon peut être transporté dans une conduite d'échantillon guidée vers une sortie de déchets (66),
(c) on a prévu une bouche de mesure (64) et
(d) une soupape de renversemement (52) par laquelle on peut intercaler la bouche de mesure (64) à choix dans la conduite porteuse (50) ou dans la conduite d'échantillon (62), ou établir un passage (58) pour l'autre conduite respective.

7. Dispositif selon la revendication 1 ou 2, **caractérisé par le fait qu'**une première pompe tubulaire (68) transporte du liquide d'échantillon dans une conduite d'échantillon (70) et une seconde pompe tubulaire (72) transporte du liquide de dilution (74) dans une conduite de dilution (74), qui débouchent avec écartement de la soupape (18) et du nébulisateur (22) dans une conduite de mélange commune (76).

8. Dispositif selon la revendication 7, **caractérisé par le fait que** la vitesse des pompes tubulaires (68,72) est variable.

9. Dispositif selon la revendication 1 ou 2, **caractérisé par le fait que**
(a) une première pompe tubulaire (94) transporte du liquide d'échantillon dans une conduite d'échantillon (96),
(b) une seconde pompe tubulaire (98) transporte un liquide standard dans une conduite standard (100), et
(c) on a prévu une soupape de renversement (92) par laquelle on peut relier à choix la conduite d'échantillon (96) ou la conduite standard (100) au nébulisateur (22), et l'autre conduite respective à une sortie de déchets (102).
